(19)

**Europäisches Patentamt**

**European Patent Office**

**Office européen des brevets**

(11)     **EP 1 616 929 B1**

(12)     **EUROPEAN PATENT SPECIFICATION**

(45) Date of publication and mention
of the grant of the patent:
**16.09.2009   Bulletin 2009/38**

(51) Int Cl.:
*C09K 11/06* (2006.01)      *C07F 15/00* (2006.01)
*B42D 15/00* (2006.01)      *G03G 21/04* (2006.01)
*G07D 7/12* (2006.01)

(21) Application number: **05380153.6**

(22) Date of filing: **12.07.2005**

(54) **Use of luminescent ruthenium (II)-type pigments in security documents, the process and device to detect them**

Verwendung von lumineszenten Ruthenium (II) pigmenten in Sicherheitsdokumenten, Verfahren und Vorrichtung zu ihrer Erkennung

Utilisation des pigments luminescents sur base de ruthenium (II) pour des documents de sécurité, procédé et dispositif pour leur détection

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.07.2004   ES 200401711**

(43) Date of publication of application:
**18.01.2006   Bulletin 2006/03**

(73) Proprietor: **FABRICA NACIONAL DE MONEDA Y TIMBRE - REAL CASA DE LA MONEDA**
**28009 Madrid (ES)**

(72) Inventors:
 • **Orellana Moraleda, Guillermo**
   **28009 Madrid (ES)**
 • **Garcia Fresnadillo, David**
   **28009 Madrid (ES)**
 • **Grande Vicente, Cristina**
   **28009 Madrid (ES)**

 • **Diez Lopez, Raul**
   **28009 Madrid (ES)**
 • **Delgado Alonso, Jesus**
   **28009 Madrid (ES)**
 • **Garcia Alonso, Jose Luis**
   **28009 Madrid (ES)**
 • **Gamo Aranda, Francisco Javier**
   **28009 Madrid (ES)**
 • **Sanchez Gonzalez, Marcelino**
   **28009 Madrid (ES)**

(74) Representative: **Carpintero Lopez, Francisco et al Herrero & Asociados, S.L.**
**Alcalá 35**
**28014 Madrid (ES)**

(56) References cited:
**US-B1- 6 402 986**

 • **PATENT ABSTRACTS OF JAPAN vol. 016, no. 212 (M-1250), 19 May 1992 (1992-05-19) & JP 04 035896 A (USHIO KK; others: 02), 6 February 1992 (1992-02-06)**

**Description**

## OBJECT OF THE INVENTION

The present invention refers to synthesized luminescent pigments belonging to the family of ruthenium (II) complexes for application in security documents or secured goods, in a way that these pigments can be incorporated into the documents or goods during the manufacture of the material used to make the document or goods, or by adding any solid or semisolid additive to the security document or paper, or it can be added afterwards to any of the security dyes or components used in the document or goods. Secured goods refer to any physical support that one wants to secure, ranging from packaging to an entry ticket for an event, distinguishing between identification documents such as identity cards, passports etc, and valuable documents such as bank notes, bank bills, checks etc.

The object of the present invention is that these luminescent pigments synthesized with the purpose of conferring additional safety to the document or goods into which they are incorporated, enable the security document or secured deeds to be encoded or individually validated using pigments with different responses to the measuring procedure described below.

Other objects of the present invention are the devices and the processes to detect or verify them, based on measuring with sensitive detection the luminescence phase emitted by these pigments and determination of the code they may incorporate.

## BACKGROUND OF THE INVENTION

In the state of the art of the technique for security documents or goods, the use of pigments or luminescent dyes to detect the validity of these documents or deeds is known. Among these, the patent US-6,402,986 is noteworthy, which refers to new compositions and methods which are used to verify products or documents. These compositions or methods are based on reading light emitted by the luminescent compositions that can be incorporated or applied to a wide range of materials to test their authenticity and which also have a high resistance, depending on the product to which these compositions are applied. In this way, it is known that these pigments or coloured dyes can be used in different ways in these security documents or goods. On the one hand, the security dyes can incorporate luminescent pigments in their formulation. Another possibility is incorporation of the luminescent pigment in a polymer, which is produced as long fibres (usually a few millimetres long). As well as long fibres, the security elements can be other shapes (discs, polygonal shapes, etc.).

The main type of luminescence used in security documents is photoluminescence, which consists in the emission of light by the luminescent pigment when this is illuminated with light of a different wavelength. Usually, the emission of light is produced in the visible range of the electromagnetic spectrum (400 nm - 700 nm), when the pigment is excited with ultraviolet radiation (UV). However, other excitation-emission intervals are also possible.

Photoluminescence can usually be classified into fluorescence and phosphorescence, depending on the lifetime of the radiation emitted. "Lifetime" of photoluminescence (or simply, luminescence) can be defined as the inverse of the rate constant of the first order kinetic process through which the spontaneous deactivation of the luminescent electronic state passes after its formation. When the deactivation passes through a kinetic process more complex than a first order one, it is usual to estimate a mean photoluminescence lifetime (such as those described by E.R. Carraway, J.N. Demas, B.A. DeGraff and J.R. Bacon, Analytical Chemistry 1991, 63, 337 or E.R. Carraway, J.N. Demas and B.A. DeGraff, Analytical Chemistry 1991, 63, 332). A pigment or dye is said to be "fluorescent" when the light emission extinguishes after a very short time, of the order of nanoseconds, after excitation of the pigment has stopped. However, a pigment is referred to as "phosphorescent" if the emission of light continues for longer, of the order of milliseconds. The term "luminescence" includes all these phenomena, regardless of the duration of the emission.

There are different ways to detect the presence of a luminescent pigment in a security document or secured goods, depending on the nature of the pigment and of its final application. A well as simple visual inspection, which consists in illuminating the document with a light source and observing the emission of light in the visible range, there are laboratory and industrial or domestic instruments to measure luminescence. The usual way in which these instruments operate is by measuring the intensity and/or longitude of the wavelength emitted from a pigment incorporated in the secured document or goods.

In the state of the art of the technique there are other more sophisticated instruments, such as that described in patent GB2240947 that permits the authenticity of documents which incorporate luminescent security elements to be verified, in a way that discriminates between fluorescence and phosphorescence using a liquid crystal shutter and a modulated excitation light.

In the state of the art of the technique, methods to detect luminescent security elements are also used based on the principle of phase-sensitive detection, which is the case of the patent US5608225 that describes a detector instrument that consists of a light source with an intensity that varies according to a preset cycle by means of a modulatory electronic signal, a photo-electric detector to detect light emitted by the luminescent element and transform it into an electric signal, and a phase detector to measure the phase difference between the electronic signal to modulate the incident light and the electric signal delivered by the photo-electric detector. The phase displacement induced is determined by asynchronous demodulation such that if the amplitude of the fluorescence signal changes greatly and depends largely on the temperature, illumination, concentration of the pigment etc. other techniques must also be used to keep these changes within certain limits. Moreover, this instrument can be used to ensure the presence or absence of a fluorescent pigment if its characteristics are within the range of those detectable by the instrument, but cannot distinguish which pigment it is.

## DESCRIPTION OF THE INVENTION

The synthesized luminescent pigments belonging to the family of ruthenium (II) complexes that are recommended here, are highly satisfactory at resolving the aforementioned problem since they can be used to make unlimited, carefully formulated mixtures and combinations of these synthesized luminescent pigments to produce specific luminescence characteristics, and the difficulty to elucidate their structure make its virtually impossible for a forger to extract and to determine the precise nature of the pigments used to manufacture the security document or security goods. The term secured goods refers to any physical support one wants to secure, ranging from packaging to a ticket for an event, making a distinction between identification documents such as identity cards, passports etc., and valuable documents such as bank notes, bank bills, checks etc.

The main application for these synthesized luminescent pigments is in security documents such as the security paper for bank notes, and for any plastic support used in security and identity documents.

These synthesized luminescent pigments belong to a family of the ruthenium (II) complexes with chelating heterocyclic ligands that can be synthesized purposely for the specific application desired. These ligands include, but are not limited to, 2,2'-bipiridine, 1,10-phenantroline, 4,4'-dinonyl-2,2'-bipiridine, 4,7-diphenyl-1,10-phenantroline, la 5-octadecanoxy-1,10-phenantroline and 4,7-di(sulphonatophenyl)-1,10-phenantroline.

Several pigments, instead of only one, are incorporated in the security document or secured goods, and each pigment is placed individually in a specific part of the document, permitting the identification of one valid document among several possible ones, in other words, the security document is encoded.

Likewise, several of these luminescent pigments can be included in the same part of the security document or secured goods, so that the response of this combination of pigments is unique for each combination of pigments selected, increasing the security of the document.

These pigments can be incorporated directly during the manufacture of the material used to make the document or goods, it can for part of a solid or semisolid additive that is added to the document or goods, or can form part of one or several of the security dyes used in the document or goods.

The luminescent pigments recommended present the following generic characteristics:

- They absorb light in the whole interval from ultraviolet to green (190-550 nm), with a high efficiency in parts of this interval.
- Whatever the light source used to excite them, their transfer to the luminescent excited state is highly efficient (many times unity).
- Quantum yields of luminescence reach values close to 50% of the photons absorbed by photoexcitation.
- They present a minimum of 100 nm separation between the absorption and emission wavelength, making observation of their luminescence very easy and of high efficacy.
- Extinction of their luminesence occurs on an unusually long time scale (0.1-50 $\mu$s), which permits different experimental procedures to be used to measure the kinetics.
- They have a high thermal stability (they can be heated to over 300 °C without decomposing) and photochemical stability. The latter being higher than that of most purely organic fluorescent molecules.
- An adequate incorporation of functional groups in the periphery of ligands makes it possible to finely adjust, as desired, their light absorption and emission properties, their solubility and the way they bind to solid supports (chemical, electrostatic, adsorption).

In this way, the luminescent pigments claimed for can encode the security documents, since the light response of each pigment is different.

Likewise, the luminescent pigments that are the object of the present invention can be used as hidden, "forensic" or "sleeping" security elements. For this purpose, included in a specific part of the valuable document or note, or in the raw material used to manufacture it, there will be a chemical precursor of the pigment or a pigment itself which remains undetected on inspection (from hereon referred to generically as the "sleeping characteristic"), in other words, it does not emit luminescence or is not detected when illuminated by the detector.

As precursors, stable compounds can be used that contain the pigment in a form that does not respond to the initial interrogation of the sensor described in the previous claims or pigments of the characteristics described above, since their basic or acidic character impedes or hinders emission of luminescence by competitive protonation or deprotonation. When, afterwards, one wants to know the authenticity of a document or bank note, this is placed in contact with a suitable reagent depending on the form of the precursor, so that the corresponding "sleeping characteristic" generates a luminescent pigment the signal of which is detected in the way described in the present invention. In the absence of any of the "sleeping characteristics" described above, the luminescent pigment is not produced and, therefore, the detector does not detect any signal and the document will not be authenticated.

Another object of this invention is the device that can be used for the selective detection of pigments. This device uses the luminescent measurement of these pigments with detection sensitive to the emission phase, guaranteeing that the measurement is independent of the amount of luminescent indicator that the security document contains, of the fluctuations of the excitation light source or the response of the detector and the presence of environmental light.

Therefore, it is important to establish the type of signal that the device detects, since this determines its design and specifications, and the components (electronic, optical and mechanical) to be incorporated. The most important parameters of the detected signal are:

**Emission lifetime ($\tau$)**

This parameter determines the modulation frequency required to correctly detect the luminescence of the chosen pigment.

Preferred luminescent pigments present non-exponential deactivation kinetics of the emission when they are incorporated in a solid medium. Therefore, the design of the detector instrument is based on determination of a mean emission lifetime ($\tau_m$).

The value of $\tau_m$ of each pigment in a document or goods is calculated by determining the extinction kinetics of the emission (by time-correlated single photon counting or by laser flash photolysis), using an excitation wavelength and an emission wavelength as similar as possible to those selected in the objective instrumentation. Afterwards, the best fit of the curve to a sum of exponential functions is found using the following expression:

$$I(t) = A_0 + B_1 e^{(-t/\tau_1)} + B_2 e^{(-t/\tau_2)} + B_3 e^{(-t/\tau_3)} + B_4 e^{(-t/\tau_4)}$$

Where $B_2$, B3 and/or $B_4$ can take a value of zero and, finally, the mean is calculated of the parameters obtained in the best fit to the previous equation according to the following expression:

$$\tau_m = \sum_i B_i \tau_i \Big/ \sum_i B_i$$

The acceptable values of $\tau_m$ to fulfil the requirements for quantification of the displacement in emission, using the recommended device, are found in the interval:

$$0.1\ \mu s < \tau_m < 50\ \mu s$$

Relative emission intensity: Depending on the amount of luminescent pigment present in the security document, and the precise nature of the synthesized pigment, there is a threshold for the emission intensity under which the recommended detector instrument cannot quantify the luminescence signal (when out of phase).

As well as determining the lifetime of the mean emission, the recommended detector instrument can simultaneously determine the amplitude of the modulated luminescence signal (indirect measurement of the emission intensity), which permits another parameter to be added to identify luminescent security materials, improving the reliability of the system.

**Excitation and emission wavelength.**

The absorption and emission wavelengths of the luminescent pigments synthesized and incorporated in the document or security goods, determine the optical components to use in the recommended optoelectronic instruments. The excitation and emission wavelengths ($\lambda$) of these pigments are within the following intervals:

$$\lambda_{excitation}: 370 \text{ nm} < \lambda < 550 \text{ nm}$$

$$\lambda_{emission}: 550 \text{ nm} < \lambda < 750 \text{ nm}$$

$$\lambda_{emission} - \lambda_{excitation} > 100 \text{ nm}$$

**Photostability and intensity of excitation light source**.

The stability of luminescent pigments against exposure to photoexcitation during the measurement, or more specifically, the stability of $\tau_m$ against photoexcitation during the measurement, determines the intensity of the light excitation that can be used in the measurement. Therefore, it is necessary to limit the global light intensity that the materials or goods which incorporate the preferred pigments can receive during their identification with the instrument.

Research undertaken by the authors of the present invention have established a minimum photostability criterion for pigments, under specific illumination and environmental conditions.

In this way, the preferred device used to detect the luminescent pigments consists of an emitter block, optical block, receptor block, a processor, a mechanical bock and a user interface, which are described below.

**Emitter block**

The system for emission or excitation of the materials is responsible for generating signals of modulated intensity, according to a sinusoidal function, or more complex, of specific frequency or frequencies. This also includes steps to convert and adapt the signal generated, to supply the light source of the optical system with the analog signal this requires.

To generate the excitation signal a DDS circuit is used (Direct Digital Synthesizer) that can produce numerical sequences of data that conform to preset mathematical functions (typically sinusoidal ones). This sequence of digital data is converted into an analog sequence by a D/A converter (Digital Analogue converter) with normalized levels of amplitude.

Finally, a circuit made for this purpose transforms these normalized levels into the required currents which, when applied to the light source (LED diode or laser diode) produces a light signal with the preset amplitude and frequencies.

Additionally, a continuous current level is permanently applied to the LED to displace the work point and to ensure that at all times the device emits light in the zone of maximum linearity of its transfer function.

**Optical block**

Acting as a link between the electronics and the optics, its function is to generate the excitation light and to focus it so it reaches the pigments incorporated in the security document or goods, and to collect from them a light sample generated and also a luminescence signal, transforming them into an electrical signal.

This block includes the devices used to generate and to receive light such as the lenses and optical filters and also to measure the temperature to make the necessary adjustments.

**Receptor block**

The receptor block is responsible for adapting the levels of the signal coming from the photonic detectors, both the reference and the luminescent signal, and to carry out successive steps of filtering and adapting the levels, for its optimum adjustment. A digital-analogue converter can deliver digitalized signals to the digital processing block.

The filtration circuits can be adapted to the characteristics of the signal generated, to obtain the best signal/noise ratio possible, in this way optimizing the correct detection capacity of the luminescent pigments even in adverse conditions of light or external disturbances. Similarly, in this block the environmental light components that can distort the real measurement are eliminated.

## PROCESSOR

Based on a 32 byte advanced processor, this block has the following functions:

- To control the synchronism of the system, to calculate the operative parameters of the system and to programme its components.
- Generation of the signal displaced by $\pi/2$ from the reference signal taken directly from the light emitter and synchronization with the luminescence signal obtained from the pigment. Determination of displacement of the emission by synchronous demodulation.
- Determination of the amplitude of the luminescence signal.
- Determination, from displacement of the luminescence and the amplitude calculated, of the type of pigment used from the group of elements available with the subsequent validation, for example, of the document or the goods that contain the preferred pigment or pigments.
- Management of the user interfaces and communications.
- Reception and management of the signals and auxiliary elements.

## Mechanical block

This has a double purpose: on the one hand it can be used as a physical support for electronic and optical cards; on the other hand, it can be used to introduce luminescent materials (documents, goods) at the focal points of the excitation and photodetection lens, serving as an interface between the measuring equipment and the printed materials.

## User interface

This permits the user to control how the equipment operates and to visualize and uptake data. The user controls the operation of the system and receives data provided by this to two complementary systems:

- Communication via a RS-232-C or USB port. Communication through this port permits the user to select and update configuration parameters of the measuring system and to load new versions of the computer programmes (software). Also, the user can recover records of displacement measurements and amplitudes stored in the optoelectronic equipment. In this way, the user can obtain records with displacement data in a suitable format to be able to manage these with standard computer software applications such as Excel.

- Screen and keyboard. The system has an LCD screen which displays the data associated with the application of the invention in security systems. Moreover, it also has a keyboard that complements this capacity for communication with a user.

Therefore, the recommended device to detect the luminescent pigments has the following characteristics:

- It can determine displacement of the luminescence in security documents or secured goods that contain the luminescent pigment or pigments developed specifically and can distinguish the pigment from a group of similar substances.
- It can indirectly determine the emission intensity.
- It can uptake and store the external temperature at two points, together with the luminescence displacement measurement. In this way, the pigment or pigments included in the security document or goods can be characterized more reliably regardless of external environmental conditions.
- It communicates with a computer for configuration of the system and data transfer.
- It verifies and decodes documents or goods that incorporate the previously mentioned pigments, according to a defined criteria.
- It can provide results of displacement, emission intensity temperature etc. for their potential use in variants of the equipment.

The present invention also refers to the detection process to verify the presence of luminescent pigments in security documents or goods. The process to determine luminescence displacement consists in the following steps:

1. Generation of a controlled light signal by opto-electronic feedback of the current applied to the first light source (LED diode), compensating the non ideal response of the light generator device. To do this, an additional photodetector measures the light emitted by the LED while a circuit, for this purpose, compares this light with the desired signal, ensuring that these are equal.

2. Use of the excitation light signal itself as a zero displacement signal to determine the displacement due to the luminescence. This enables the changes in phases produced in the light signals by different steps of the electronic circuit to be compensated for, since these phase changes induced by the electronic circuit affect both equally, they automatically cancel each other out.

3. Compensation of the phase changes due to temperature changes, by measuring this temperature and compensating for its effects by a digital process specifically for this purpose.

4. Use of a synchronous demodulation technique, for application in radio-electrical communications to improve the precision and stability of the measurement.

In this way, the security document or goods that incorporates the luminescent pigment or pigments is placed in position and a light signal is generated with an intensity modulated by a periodic wave, of known spectrum, which photoexcites the luminescent pigment.

The intensity of the light emitted from the pigment is modulated to the same frequency as the excitation and is collected by a photoionic detector, which transforms these changes in intensity into electrical signals.

Similarly, a light sample emitted by the excitation source is collected directly, without interaction with the pigments, using a second photodetector. This light signal, also transformed into an electrical signal by the photodetector, provides a good indication of the signal used to excite the pigment, revealing the distortions or variations compared to the signal generated initially.

After conveniently adapting and filtering both signals, which only differ in the changes introduced by the photophysical phenomena occurring in the pigment, the displacement between them is measured, and is a function of the emission kinetics of the pigment used.

Determination of the displacement induced is done by synchronous demodulation, which is more effective than asynchronous demodulation.

In synchronous demodulation, two signals are used: the carrier or in phase signal, $A \ast \cos(\omega \ast t)$ and another signal of equal amplitude shifted by $\pi/2$ called the quadrature signal

This quadrature signal is obtained by shifting the signal in a phase time equivalent to a quarter of the period of this signal. Hence:

$$\text{Carrier in phase: } A \ast \cos(\omega \ast t).$$

$$\text{Carrier in quadrature: } A \ast \cos(\omega \ast t + \pi/2).$$

The approach applied now consists in multiplying the signal modulated by the in phase carrier, as for the case of asynchronous demodulation, and repeating the process for the carrier in quadrature, obtaining

$$A \ast \cos(\omega \ast t) \ast B \ast \cos(\omega \ast t + \Phi) = A \ast B/2 \ast \cos(\Phi) + A \ast B/2 \ast \cos(2 \ast \omega \ast t + \Phi)$$

$$A \ast \cos(\omega \ast t + \pi/2) \ast B \ast \cos(\omega \ast t + \Phi) = A \ast B/2 \ast \cos \Phi + \pi/2) + A \ast B/2 \ast \cos(2 \ast \omega \ast t + \Phi + \pi/2)$$

Ignoring the double frequency components, which are removed by the filter, we have two signals which are proportional to the cosine of the shift and that of this shift plus $\pi/2$, in other words, proportional to the Sine of the angle.

$$A \ast B/2 \ast \cos(\Phi)$$

$$A \ast B/2 \ast \cos(\Phi + \pi/2) = A \ast B/2 \ast \text{sine}(\Phi)$$

If now we estimate the quotient of both magnitudes we obtain:

$$A^*B/2^*cos\ (\Phi)\ /\ A^*B/2^*sine\ (\Phi) = tan\ (\Phi)$$

Such that the Φ phase can be obtained by simple applying the Arctan function.

It can be observed, therefore, there is no longer dependence of the amplitudes either of the entry signal or of that generated in the pigment. This increases the stability and the precision of the measurement obtained, which permits a quantitative analysis of the pigments used, so that not only their presence or absence can be determined but also identification of the pigment concerned from a given group of pigments.

In addition to the technique described in preceding paragraphs, in the technique proposed here, the A*cos (ω*t) carrier signal is not used directly to obtain the displacement. Instead, a signal is obtained by an additional photodetector that directly receives the excitation light, and it is this signal and this signal shifted by π/2, which are used as phase and quadrature signals in the mathematical process used to obtain the phase.

In this way, the real excitation signal is taken, compensating delays due to the electronics itself and distortions of the signal produced by light emitting diodes (LED).

## DESCRIPTION OF THE DRAWINGS

To complement the description and to help understand the characteristics of the invention, according to a preferred embodiment of the invention, this is accompanied, as part of the description, by a set of diagrams which serve to illustrate the invention, but in no way limit its application, these represent the following:

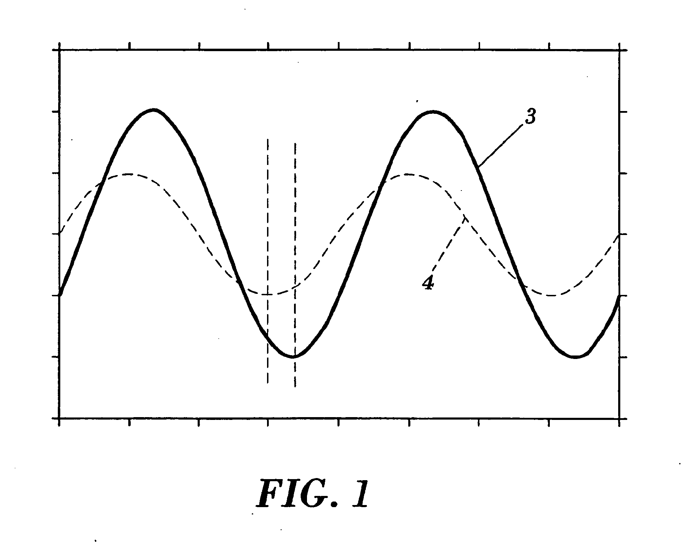

Figure 1.- This shows a diagram of the excitation signals (continuous line) and the emission signal (dashed line) with a displacement of an angle Φ between them.

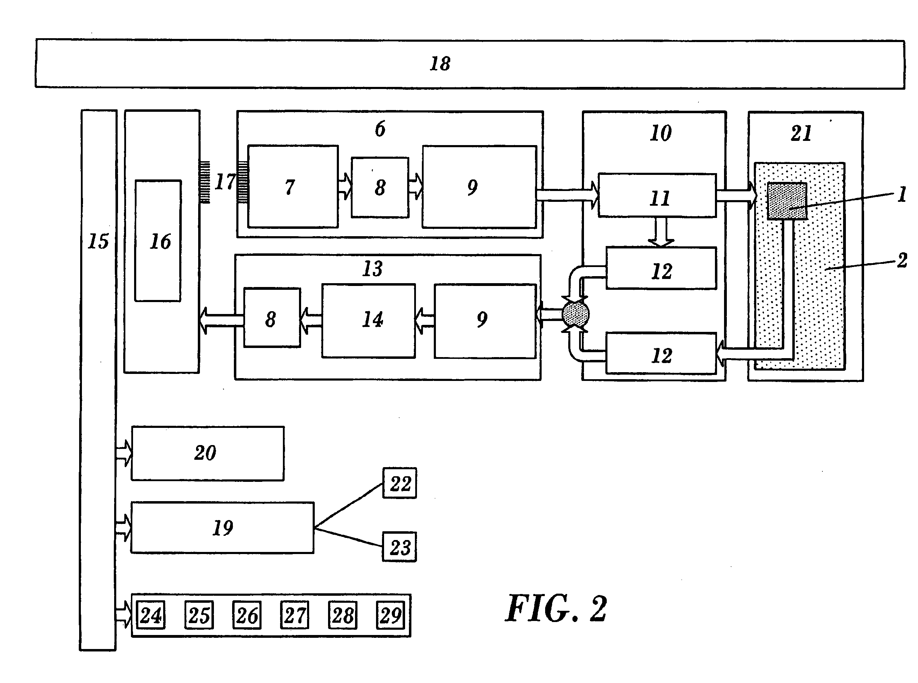

Figure 2.- This shows a block diagram corresponding to the detector device of the invention, showing its most relevant parts.

## PREFERRED EMBODIMENT OF THE INVENTION

The present invention refers to luminescent pigments (1) incorporated in the security documents or goods (2), such that the luminescent pigment (1) synthesized or resulting from the combination of several luminescent pigments (1) has specific luminescent properties since each luminescent pigment (1) responds differently to illumination, permitting these security documents or goods (2) to be encoded.

The main application of these synthesized luminescent pigments (1) is in security documents or goods (2), such as the security paper for bank notes, and any plastic support used in security and identity documents (2).

These synthesized luminescent pigments (1) belong to the family of ruthenium II complexes with chelating heterocyclic ligands that can be synthesized specifically for each application.

These luminescent pigments (1) can be incorporated directly during the manufacture of the material used to make the document or goods to be secured, or form part of one or several of the security dyes used in the document or goods (2). If used during preparation of the dyes, they can be added directly or adsorbed previously to a solid or semisolid additive.

The luminescent pigments referred to present the following generic characteristics:

- They absorb light in the whole region from the ultraviolet to the green (190-550 nm), with a high efficiency in many zones of this interval.
- Whatever the light chosen for their photoexcitation, the change to this fluorecent excited state is highly efficient (many times unity).
- Quantum yields of luminesence can reach values of around 50% of the photons absorbed for photoexcitation.
- Thry present a maximum excitation wavelength (26) in the interval (400-550) nm.
- They present a maximum emission wavelength (27) in the interval (550-750) nm.
- They present a minimum separation of 100 nm between the absorption and the emission wavelength, making observation of its luminescence extremely easy and effective.
- Extinction of the fluorescence occurs in an unusually long time scale (0.1-50 μs), permitting access to different procedures to experimentally measure the kinetics.
- They have a high thermal stability (they can be heated to over 300 °C without decomposing) and photochemical stability, with the latter being at least 100 times that of any purely organic fluorescent compound.
- Good incorporation of functional groups on the periphery of ligands makes it possible to select its light absorption and emission properties, its solubility and the way it binds to solid supports (chemical, electrostatic, adsorption).

Another object of the invention is a device that can selectively detect and decode the luminescent pigments (1), and does this by measuring the luminescence with phase-sensitive detection, guaranteeing that the measurement is independent of the amount of luminescent pigment (1) that the document contains (2), of the fluctuations in the excitation light source, of the response of the detector or the presence of environmental light.

This device can, at least, determine the mean emission lifetime (24) in the interval (0.1-50) $\mu$s, the relative emission intensity (25), the excitation wavelength (26), the emission wavelength (27), the photostability (28) and the excitation light intensity (29).

The detection device for luminescent pigments referred to consists of an optical block (10) that interacts with the materials' interface (21) on which a security document or goods (2) is placed that incorporates luminescent pigments (1), such that this optical block (10) interacts with the emitter block (6), which produces the excitation signal (3) and, with the receptor block (13), which receives and transforms the signal emitted (4), with the additional feature of a processor (15) with which the user can control and monitor the processes via a user interface (19), furnished with a mechanical block (18) as a support.

The emitter block (6) consists, at least, of an oscillator (7) which generates signals of modulated intensity according to a sinusoidal function of a specific frequency, at least an analog-to-digital converter (8) that transforms the digital data sequence from the oscillator (7) into a normalized amplitude analog signal, and, at least, an adaptor signal (9), to adapt the analogue signal generated by the analog-to-digital converter (8) to supply the optical block (10) with an analog signal that this requires.

The oscillator (7) consists of a DDS circuit (Direct Digital Synthesizer) that can produce numerical sequences of data that conform with preset, typically sinusoidal, mathematical functions.

The signal adaptor (9) transforms the signal from the analog-to-digital converter (8) so that when a light emitter diode (LED) is applied, this produces the light signal with the preset amplitude and frequencies.

The optical block (10), consists, at least, of a light emitter (11) that generates the excitation signal (3), focusing it on the luminescent pigments (1), at least one detector (12) to receive a sample of the excitation signal (3) and, at least one other detector (12) to receive the signal emitted (4) by the luminescent pigments (1). This also consists of a series of lenses, optical filters and elements to measure the temperature to make the necessary adjustments.

The receptor block (13) consists, at least, of an adaptor signal (9) of the signals coming from the detectors (12), at least one filter (14) and at least one analog-to-digital converter (8) that permit digitalised signals to be delivered to the digital process (16).

The processor (15), is comprised of a 32 byte advanced processor that has a digital process (16) that fulfils the following functions:

- It controls the synchronism (17) of the system.
- It calculates the operational parameters of the system.
- Programming the different components.
- Generation of a signal with a $\pi/2$ displacement from a reference signal taken directly from the light emitter (12) and synchronization with the emitted signal (4) by the luminescent pigment (1).
- Determination of the displacement (5) by synchronous demodulation of the luminescence signal emitted (4) and the reference excitation signal (3).
- Determination, from the displacement (5) calculated, of the type of luminescent pigment (1).
- Management of the user interfaces (19) and of the communications (20).
- Reception and management of the signals and additional elements.

The function of the mechanical block (18) is to serve as a physical support for the electronic cards and the optical block, permitting the documents (2) with the luminescent pigments (1) to be placed at the focal points of the excitation and photodetection lenses.

The user interface (19) consists of ports (22) and peripheral elements (23), that can be used to control the operation of the device, and visualization and reception of data, in that the ports (22) are RS-232-C or USB type, and permit the user to select and to update the configuration parameters of the measuring system and to load new versions of the software, and to obtain records of displacement and amplitude measurements stored in the device and can provide records of displacement data in a suitable format to manage these with standard applications. On the other hand, peripheral elements (23) could include a screen to visualize the data and/or a keyboard.

The present invention also includes the detection process to verify the presence of the luminescent pigments (1) in the security documents or goods (2). The process to determine the displacement of the luminescence consists in the following steps:

1. Generation of an excitation signal (3) controlled by opto-electronic feedback of the current applied to the primary light source (LED diode or laser diode) compensating the non-ideal response of the light generator device. To do this, an additional photodetector measures the light emitted by the LED or laser diode while a circuit set up for this purpose compares this light with the desired signal, to ensure the equality.

2. Use of the excitation signal itself (3) as a zero phase signal to determine displacement (5) due to the fluorescence. In this way, changes in phase produced in the light signals in the different steps of the electronic circuit can be compensated for, since these phase changes induced by the electronic circuit equally affect both signals and thus automatically cancel each other out.

3. Compensation for the changes in phase due to temperature changes by measuring the temperature and compensating for its effect by a digital process (16) specifically for this purpose.

4. Use of a synchronous demodulation technique, for application in radio-electrical communications to improve the precision and stability of the measurement.

In this way, the security document (2) that incorporates the luminescent pigment (1) is introduced and an excitation signal is generated (3) the intensity of which is modulated according to a periodic wave, of known spectrum, which photoexcites the luminescent pigment (1).

The intensity of the light emission from the luminescent pigment (1) is modulated to the same frequencies as the excitation and is picked up by a photoionic detector (12) that transforms these changes in light intensity into electrical signals.

Similarly, a sample of the excitation signal (3) emitted by the excitation source is picked up immediately, without interacting with the luminescent pigment (1), by a second detector (12). This light signal, also transformed into an electrical signal by the detector (12), provides a true indication of the signal used to excite the luminescent pigment (1), revealing the distortions or variations in the signal generated initially.

After the appropriate adaptations and filtrations have been made of both signals, which only differ owing to the changes resulting from photophysical phenomena occurring in the luminescent pigment (1), the displacement is determined (5), which will be a function of the emission kinetics of the luminescent pigment (1) used.

The displacement (5) induced is calculated using a synchronous demodulation technique, which is more effective than asynchronous demodulation.

**Claims**

1. Use of a luminescent pigment belonging to the family of ruthenium (II) complexes with chelating heterocyclic ligands for encoding or validating a security document or a secured good.

2. Use according to claim 1, wherein the chelating heterocyclic ligands are selected from 2,2'-bipiridine, 1,10-phenantroline, 4,4'-dinonyl-2,2'-bipiridine, 4,7-diphenyl-1,10-phenantroline, 5-octadecanoxy-1,10-phenantroline and 4,7-di(sulphonatophenyl)-1,10-phenantroline.

3. Use according to claim 1 or 2, which comprises including a luminescent pigment belonging to the family of ruthenium (II) complexes with chelating heterocyclic ligands in the document or good:

   (i) during manufacture of the substrate material of the document or good, or
   (ii) as part of a solid or semisolid additive added to the document or good or
   (iii) as part of one or more of the security dyes incorporated in the document or good.

4. Use according to any of claims 1-3, wherein more than one luminescent pigment is incorporated in the security document or secured good each of the pigments being placed individually in a specific part of the document or good.

5. Use according to any of claims 1-3, wherein more than one luminescent pigment is incorporated in the security document or secured good in form of a particular combination of luminescent pigments.

6. Use according to any of claims 1-5, wherein the security document is a security paper for bank note or an identity document.

7. A security document or secured good **characterized in that** it comprises a luminescent pigment belonging to the family of ruthenium (II) complexes with chelating heterocyclic ligands.

8. Device for detecting and decoding the use of luminescent pigments (1) in a security document or a secured good (2) for encoding or validating said security document or good (2) according to claims 1 to 7, **characterized in that** comprises an optical block (10) that interacts with the materials' interface (21) on which a security document or good (2) that incorporates luminescent pigments (1) is placed, such that this optical block-(10) interacts with the emitter block (6), which produces the excitation signal (3) and, with the receptor block (13), which receives and transforms the signal emitted (4), with the additional feature of a processor (15) with which the user can control and monitor the processes via a user interface (19), furnished with a mechanical block (18) as a support.

9. Device according to claim 8 **characterized in that** it can selectively detect and decode the luminescent pigments (1), and does this by measuring the luminescence with phase-sensitive detection, guaranteeing that the measurement is independent of the amount of luminescent pigment (1) that the document contains (2), of the fluctuations in the excitation light source, of the response of the detector or the presence of environmental light.

10. Device according to claims 8 and 9 **characterized in that** it can, at least, determine the mean emission lifetime (24), the relative emission intensity (25).

11. Device according to claim 10 **characterized in that** it can determine the mean emission lifetime (24) in the interval (0.1-50) $\mu$s.

12. Device according to claims 8 to 11 **characterized in that** the emitter block (6) comprises, at least, an oscillator (7) which generates signals of
modulated intensity according to a sinusoidal function of a specific frequency, at least an analog-to-digital converter (8) that transforms the digital data sequence from the oscillator (7) into a normalized amplitude analog signal, and, at least, an adaptor signal (9), to adapt the analogue signal generated by the analog-to-digital converter (8) to supply the optical block (10) with an analog signal that this requires.

13. Device according to claim 12 **characterized in that** the oscillator (7) comprises a DDS circuit (Direct Digital Synthesizer) that can produce numerical sequences of data that conform with preset, typically sinusoidal, mathematical functions.

14. Device according to claim 12 **characterized in that** the signal adaptor (9) transforms the signal from the analog-to-digital converter (8) so that when a light emitter diode (LED) is applied, this produces the light signal with the preset amplitude and frequencies.

15. Device according to claims 8 to 14 **characterized in that** the optical block (10), comprises, at least, a light emitter (11) that generates the excitation signal (3), focusing it on the luminescent pigments (1), at least one detector (12) to receive a sample of the excitation signal (3) and, at least one other detector (12) to receive the signal emitted (4) by the luminescent pigments (1).

16. Device according to claims 8 to 15 **characterized in that** the optical block (10) comprises a series of lenses, optical filters.

17. Device according to claims 8 to 16 **characterized in that** the receptor block (13) comprises, at least, an adaptor signal (9) of the signals coming from the detectors (12), at least one filter (14) and at least one analog-to-digital converter (8) that permits digitalised signals to be delivered to the digital process (16).

18. Device according to claims 8 to 17 **characterized in that** the processor (15), is comprised of a 32 byte advanced processor.

19. Device according to claims 8 to 18 **characterized in that** the processor (15) that has a digital process (16) fulfils the following functions:

   - It controls the synchronism (17) of the system.
   - It calculates the operational parameters of the system.
   - Programming the different components.
   - Generation of a signal with a $\pi/2$ displacement from a reference signal taken directly from the light emitter (12) and synchronization with the emitted signal (4) by the luminescent pigment (1).
- Determination of the displacement (5) by synchronous demodulation of the luminescence signal emitted (4) and the reference excitation signal (3).
- Determination, from the displacement (5) calculated, of the type of luminescent pigment (1).
- Management of the user interfaces (19) and of the communications (20).
- Reception and management of the signals and additional elements.

20. Device according to claims 8 to 19 **characterized in that** the mechanical block (18) serves as a physical support for the electronic cards and the optical block.

21. Device according to claims 8 to 20 **characterized in that** the mechanical block (18) permits the documents (2) with the luminescent pigments (1) to be placed at the focal points of the excitation and photodetection lenses.

22. Device according to claims 8 to 21 **characterized in that** the user interface (19) comprises ports (22) and peripheral elements (23), that can be used to control the operation of the device, and visualization and reception of data.

23. Device according to claim 22 **characterized in that** the ports (22) are RS-232-C or USB type, and permit the user to select and to update the configuration parameters of the measuring system and to load new versions of the software, and to obtain records of displacement and amplitude measurements stored in the device and can provide records of displacement data in a suitable format to manage these with standard applications.

24. Device according to claim 22 **characterized in that** peripheral elements (23) are a screen to visualize the data and/or a keyboard.

## Patentansprüche

1. Verwendung eines lumineszenten Pigmentes, das zur Familie von Ruthen-(II)-Komplexen gehört, mit chelatisierenden, heterocyclischen Liganden zum Kodieren oder Validieren eines Sicherheitsdokumentes oder einer gesicherten Ware.

2. Verwendung nach Anspruch 1, worin die chelatisierenden, heterocyclischen Liganden ausgewählt sind aus 2,2'-Bipyridin, 1,10-Phenantrolin, 4,4'-Dinonyl-2,2'-bipyridin, 4,7-Diphenyl-1,10-phenantrolin, 5-Octadecanoxy-1,10-phenantrolin und 4,7-Di(sulphonatophenyl)-1,10-phenantrolin.

3. Verwendung nach Anspruch 1 oder 2, umfassend das Einschließen eines lumineszenten Pigmentes, das zur Familie der Ruthen-(II)-Komplexe gehört, mit chelatisierenden, heterocyclischen Liganden in das Dokument oder die Ware:

   (i) während der Herstellung des Substratmaterials des Dokumentes oder der Ware, oder
   (ii) als Teil eines festen oder semifesten Additivs, das zum Dokument oder der Ware gegeben ist, oder
   (iii) als Teil von einem oder mehreren Sicherheitsfarbstoffen, die in das Dokument oder die Ware eingefügt sind.

4. Verwendung nach einem der Ansprüche 1 bis 3, worin mehr als ein lumineszentes Pigment in das Sicherheitsdokument oder die gesicherte Ware eingefügt ist, wobei jedes der Pigmente individuell in einem spezifischen Teil des Dokumentes oder der Ware angeordnet ist.

5. Verwendung nach einem der Ansprüche 1 bis 3, worin mehr als ein lumineszentes Pigment in das Sicherheitsdokument oder die gesicherte Ware in der Form einer bestimmten Kombination von lumineszenten Pigmenten eingefügt ist.

6. Verwendung nach einem der Ansprüche 1 bis 5, worin das Sicherheitsdokument ein Sicherheitspapier für eine Banknote oder ein Identitätsdokument ist.

7. Sicherheitsdokument oder gesicherte Ware, **dadurch gekennzeichnet, dass** es/sie ein lumineszentes Pigment, dass zu der Familie von Ruthen-(II)-Komplexen gehört, mit chelatisierenden, heterocyclischen Liganden umfasst.

8. Vorrichtung zum Ermitteln und Dekodieren der Verwendung von lumineszenten Pigmenten (1) in einem Sicherheitsdokument oder einer gesicherten Ware (2) zum Kodieren oder Validieren des Sicherheitsdokumentes oder der Ware (2) nach den Ansprüchen 1 bis 7, **dadurch gekennzeichnet, dass** sie einen optischen Block (10) umfasst, der mit der Materialschnittstelle (21) interagiert, auf dem ein Sicherheitsdokument oder Ware (2), die lumineszenten Pigmente (1) eingefügt aufweisen, angeordnet ist, so dass dieser optische Block (10) mit dem Emitterblock (6), der das Anregungssignal (3) erzeugt, und mit dem Rezeptorblock (13) interagiert, der das emittierte Signal (4) empfängt und transformiert, mit dem zusätzlichen Merkmal eines Prozessors (15), mit dem der Benutzer die Verfahren über eine Benutzerschnittstelle (19) steuern und aufzeichnen kann, versehen mit einem mechanischen Block (18) als Träger.

9. Vorrichtung nach Anspruch 8, **dadurch gekennzeichnet, dass** sie selektiv die lumineszenten Pigmente (1) ermitteln und dekodieren kann und dies durch Messen der Lumineszenz mit phasenempfindlicher Ermittlung erfolgt, wobei garantiert wird, dass die Messung unabhängig von der Menge des lumineszenten Pigmentes (1), das das Dokument (2) enthält, von den Fluktuationen in der Anregungslichtquelle, der Antwort des Detektors oder des Vorhandenseins von Umgebungslicht ist.

10. Vorrichtung nach den Ansprüchen 8 und 9, **dadurch gekennzeichnet, dass** sie zumindest die mittlere Emissionslebensdauer (24), die relative Emissionsintensität (25) bestimmen kann.

11. Vorrichtung nach Anspruch 10, **dadurch gekennzeichnet, dass** sie die mittlere Emissionslebensdauer (24) im Intervall (0,1 bis 50 $\mu$s) ermitteln kann.

12. Vorrichtung nach den Ansprüchen 8 bis 11, **dadurch gekennzeichnet, dass** der Emitterblock (6) zumindest einen Oszillator (7) enthält, der Signale von modulierter Intensität gemäß einer Sinusfunktion einer spezifischen Frequenz, zumindest einen Analog-in-Digital-Umwandler (8), der die Digitaldatensequenz von dem Oszillator (7) in ein normales Amplitudenanalogsignal transformiert, und zumindest ein Adaptersignal (9) zum Adaptieren des Analogsignals, das durch den Analog-in-Digital-Umwandler (8) erzeugt ist, umfasst, zum Versehen des optischen Blockes (10) mit einem Analogsignal, der dieses erfordert.

13. Vorrichtung nach Anspruch 12, **dadurch gekennzeichnet, dass** der Oszillator (7) einen DDS-Kreislauf (Direct Digital Synthesizer) umfasst, der numerische Sequenzen von Daten erzeugen kann, die mit vorbestimmten mathematischen, typischerweise Sinusfunktionen übereinstimmen.

14. Vorrichtung nach Anspruch 12, **dadurch gekennzeichnet, dass** der Signaladapter (9) das Signal von dem Analog-in-Digital-Umwandler (8) transformiert, so dass dann, wenn eine lichtemittierende Diode (LED) verwendet wird, dieser das Lichtsignal mit der vorbestimmten Amplitude und den Frequenzen produziert.

15. Vorrichtung nach den Ansprüchen 8 bis 14, **dadurch gekennzeichnet, dass** der optische Block (10) zumindest einen Lichtemitter (11), der das Anregungssignal (3) erzeugt, wobei dieses auf die lumineszenten Pigmente (1) fokussiert wird, zumindest einen Detektor (12) für den Empfang einer Probe des Anregungssignals (3) und zumindest einen anderen Detektor (12) zum Empfangen des Signals (4) umfasst, das durch die lumineszenten Pigmente (1) emittiert wird.

16. Vorrichtung nach den Ansprüchen 8 bis 15, **dadurch gekennzeichnet, dass** der optische Block (10) eine Serie von Linsen, optischen Filtern umfasst.

17. Vorrichtung nach den Ansprüchen 8 bis 16, **dadurch gekennzeichnet, dass** der Rezeptorblock (13) zumindest ein Adaptersignal (9) der Signale, die von den Detektoren (12) kommen, zumindest einen Filter (14) und zumindest einen Analog-in-Digital-Umwandler (8) umfasst, der ermöglicht, dass digitalisierte Signale zu dem Digitalprozess (16) geführt werden.

18. Vorrichtung nach den Ansprüchen 8 bis 17, **dadurch gekennzeichnet, dass** der Prozessor (15) sich aus einem 32 bit fortgeschrittenen Prozessor zusammensetzt.

19. Vorrichtung nach den Ansprüche 8 bis 18, **dadurch gekennzeichnet, dass** der Prozessor (15), der ein digitales Verfahren (16) aufweist, die folgenden Funktionen erfüllt:

- er steuert den Synchronismus (17) des Systems
- er berechnet die Operationsparameter des Systems
- Programmierung der unterschiedlichen Komponenten

- Erzeugung eines Signals mit einer n/2-Verschiebung von einem Referenzsignal, das direkt von dem Lichtemitter (12) stammt, und Synchronisierung mit dem emittierten Signal (4) durch das lumineszente Pigment (1),
- Bestimmung der Verschiebung (5) durch synchrone Demodulation des emittierten Lumineszenzsignals (4) und des Referenzanregungssignals (3),
- Bestimmung der Art des lumineszenten Pigmentes (1) von der berechneten Verschiebung,
- Management der Benutzerschnittstellen (19) und der Kommunikationen (20)
- Rezeption und Management der Signale und zusätzlicher Elemente.

**20.** Vorrichtung nach den Ansprüchen 8 bis 19, **dadurch gekennzeichnet, dass** der mechanische Block (18) als ein physikalischer Träger für die elektronischen Karten und den optischen Block dient.

**21.** Vorrichtung nach den Ansprüchen 8 bis 20, **dadurch gekennzeichnet, dass** der mechanische Block (18) ermöglicht, dass die Dokumente (2) mit den lumineszenten Pigmenten (1) beim Fokus der Anregung und der Fotoermittlungslinsen angeordnet sind.

**22.** Vorrichtung nach den Ansprüchen 8 bis 21, **dadurch gekennzeichnet, dass** die Benutzerschnittstelle (19) Anschlüsse (22) und periphere Elemente (23) umfasst, die zum Steuern des Betriebs der Vorrichtung und zur Visualisierung und zum Empfang von Daten verwendet werden können.

**23.** Vorrichtung nach Anspruch 22, **dadurch gekennzeichnet, dass** die Anschlüsse (22) vom RS-232-C- oder USB-Typ sind und dem Benutzer ermöglichen, die Konfiguratonsparameter des Messsystems zu selektieren und abzudaten und neue Versionen der Software zu laden und Aufzeichnungen von Verschiebungen und Amplitudenmessungen zu erhalten, die in der Vorrichtung gespeichert sind, und Aufzeichnungen von Verschiebungsdaten in einem geeigneten Format ergeben kann, damit diese mit Standardanwendungen gehandhabt werden können.

**24.** Vorrichtung nach Anspruch 22, **dadurch gekennzeichnet, dass** periphere Elemente (23) ein Schirm, zum Visualisieren der Daten und/oder eine Tastatur sind.

## Revendications

**1.** Utilisation d'un pigment luminescent appartenant à la famille des complexes du ruthénium (II) avec des ligands hétérocycliques chélatants pour coder ou valider un document de sécurité ou un bien sécurisé.

**2.** Utilisation selon la revendication 1, dans laquelle les ligands hétérocycliques chélatants sont choisis parmi la 2,2'-bipyridine, la 1,10-phénantroline, la 4,4'-dinonyl-2,2'-bipyridine, la 4,7-diphényl-1,10-phénantroline, la 5-octadécanoxy-1,10-phénantroline et la 4,7-di(sulfonatophényl)-1,10-phénantroline.

**3.** Utilisation selon la revendication 1 ou 2, qui comprend l'inclusion d'un pigment luminescent appartenant à la famille des complexes du ruthénium (II) avec des ligands hétérocycliques chélatants dans le document ou le bien :

(i) pendant la fabrication du matériau de substrat du document ou du bien, ou
(ii) comme partie d'un additif plein ou semi-plein ajouté au document ou du bien, ou
(iii) comme partie d'une ou plusieurs des teintes de sécurité incorporées dans le document ou le bien.

**4.** Utilisation selon l'une quelconque des revendications 1 à 3, dans laquelle plus d'un pigment luminescent est incorporé dans le document de sécurité ou le bien sécurisé, chacun des pigments étant placé individuellement dans une partie spécifique du document ou du bien.

**5.** Utilisation selon l'une quelconque des revendications 1 à 3, dans laquelle plus d'un pigment luminescent est incorporé dans le document de sécurité ou le bien sécurisé, sous la forme d'une combinaison particulière de pigments luminescents.

**6.** Utilisation selon l'une quelconque des revendications 1 à 5, dans laquelle le document de sécurité est un papier de sécurité pour un billet de banque ou un document d'identité.

**7.** Document de sécurité ou bien sécurisé **caractérisé en ce qu'**il comprend un pigment luminescent appartenant à la famille des complexes du ruthénium (II) avec des ligands hétérocycliques chélatants.

**EP 1 616 929 B1**

8. Dispositif pour détecter et décoder l'utilisation de pigments luminescents (1) dans un document de sécurité ou un bien sécurisé (2) pour coder ou valider ledit document de sécurité ou ledit bien sécurisé (2) selon les revendications 1 à 7, **caractérisé en ce qu'**il comprend un bloc optique (10) qui interagit avec l'interface d'un matériau (21) sur laquelle un document de sécurité ou un bien (2) qui incorpore des pigments luminescents (1) est placé, de telle sorte que ce bloc optique (10) interagit avec le bloc émetteur (6), qui produit les signaux d'excitation (3) et, avec le bloc récepteur (13), qui reçoit et transforme le signal émis (4), avec la particularité additionnelle d'un processeur (15) avec lequel l'utilisateur peut commander et surveiller les processus via une interface utilisateur (19), fournie avec un bloc mécanique (18) comme support.

9. Dispositif selon la revendication 8, **caractérisé en ce qu'**il peut détecter et décoder sélectivement les pigments luminescents (1), et le réalise en mesurant la luminescence avec une détection sensible à la phase, garantissant que la mesure est indépendante de la quantité de pigment luminescent (1) que le document (2) contient, des fluctuations dans la source de lumière d'excitation, de la réponse du détecteur ou de la présence d'une lumière environnementale.

10. Dispositif selon les revendications 8 et 9, **caractérisé en ce qu'**il peut au moins déterminer la durée de vie moyenne d'émission (24) et l'intensité d'émission relative (25).

11. Dispositif selon la revendication 10, **caractérisé en ce qu'**il peut déterminer la durée de vie moyenne d'émission (24) dans l'intervalle de 0,1 à 50 $\mu$s.

12. Dispositif selon les revendications 8 à 11, **caractérisé en ce que** le bloc émetteur (6) comprend au moins un oscillateur (7) qui génère des signaux d'intensité modulée selon une fonction sinusoïdale d'une fréquence spécifique, au moins un convertisseur analogique-numérique (8) qui transforme la séquence de données numérique provenant de l'oscillateur (7) en un signal analogique d'amplitude normalisée et, au moins, un signal d'adaptateur (9) pour adapter le signal analogique généré par le convertisseur analogique-numérique (8) pour fournir au bloc optique (10) un signal analogique qu'il nécessite.

13. Dispositif selon la revendication 12, **caractérisé en ce que** l'oscillateur (7) comprend un circuit DDS (synthétiseur numérique direct) qui peut produire des séquences numériques de données qui se conforment à des fonctions mathématiques prédéfinies, typiquement sinusoïdales.

14. Dispositif selon la revendication 12, **caractérisé en ce que** l'adaptateur de signal (9) transforme le signal provenant du convertisseur analogique-numérique (8) de sorte que lorsqu'une diode électroluminescente (DEL) est appliquée, cela produit le signal de lumière avec l'amplitude et les fréquences prédéfinies.

15. Dispositif selon les revendications 8 à 14, **caractérisé en ce que** le bloc optique (10) comprend au moins un émetteur de lumière (11) qui génère le signal d'excitation (3), le focalisant sur les pigments luminescents (1), au moins un détecteur (12) pour recevoir un échantillon du signal d'excitation (3) et au moins un autre détecteur (12) pour recevoir le signal émis (4) par les pigments luminescents (1).

16. Dispositif selon les revendications 8 à 15, **caractérisé en ce que** le bloc optique (10) comprend une série de lentilles et filtres optiques.

17. Dispositif selon les revendications 8 à 16, **caractérisé en ce que** le bloc récepteur (13) comprend au moins un signal d'adaptateur (9) des signaux provenant des détecteurs (12), au moins un filtre (14) et au moins un convertisseur analogique-numérique (8) qui permet de délivrer des signaux numérisés au processus numérique (16).

18. Dispositif selon les revendications 8 à 17, **caractérisé en ce que** le processeur (15) se compose d'un processeur avancé à 32 octets.

19. Dispositif selon les revendications 8 à 18, **caractérisé en ce que** le processeur (15) qui comporte un processus numérique (16) remplit les fonctions suivantes :

    - il commande le synchronisme (17) du système,
    - il calcule les paramètres fonctionnels du système,
    - il programme les différents composants,
    - il génère un signal avec un déphasage de $\pi/2$ par rapport à un signal de référence prélevé directement depuis

**15**

l'émetteur de lumière (12) et effectue la synchronisation avec le signal émis (4) par le pigment luminescent (1),
- il détermine le déphasage (5) par démodulation synchrone du signal de luminescence émis (4) et du signal d'excitation de référence (3),
- il détermine, à partir du déphasage (5) calculé, le type de pigment luminescent (1),
- il gère les interfaces utilisateur (19) et les communications (20),
- il reçoit et gère les signaux et des éléments additionnels.

20. Dispositif selon les revendications 8 à 19, **caractérisé en ce que** le bloc mécanique (18) sert de support physique pour les cartes électroniques et le bloc optique.

21. Dispositif selon les revendications 8 à 20, **caractérisé en ce que** le bloc mécanique (18) permet de placer le document (2) avec les pigments luminescents (1) aux points focaux des lentilles d'excitation et de photodétection.

22. Dispositif selon les revendications 8 à 21, **caractérisé en ce que** l'interface utilisateur (19) comprend des ports (22) et des éléments périphériques (23), qui peuvent être utilisés pour commander le fonctionnement du dispositif, et la visualisation et la réception des données.

23. Dispositif selon la revendication 22, **caractérisé en ce que** les ports (22) sont de type RS-232-C ou USB, et permettent à l'utilisateur de sélectionner et de mettre à jour les paramètres de configuration du système de mesure et de charger de nouvelles versions du logiciel, et d'obtenir des enregistrements de mesures de déphasage et d'amplitude stockées dans le dispositif et peuvent fournir des enregistrements de données de déphasage sous un format approprié pour les gérer avec des applications types.

24. Dispositif selon la revendication 22, **caractérisé en ce que** les éléments périphériques (23) sont un écran destiné à visualiser les données et/ou un clavier.

**FIG. 1**

**FIG. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6402986 B
- GB 2240947 A

- US 5608225 A

**Non-patent literature cited in the description**

- **E.R. Carraway ; J.N. Demas ; B.A. DeGraff ; J.R. Bacon.** *Analytical Chemistry,* 1991, vol. 63, 337

- **E.R. Carraway ; J.N. Demas ; B.A. DeGraff.** *Analytical Chemistry,* 1991, vol. 63, 332